# EUROPEAN PATENT APPLICATION

(11) **EP 3 787 313 A1**
(43) Date of publication of application: **03.03.2021**
(21) Application number: 20382779.5
(22) Date of filing: 01.09.2020
(51) Int. Cl.: H04R 5/04, G06F 3/16

(54) **VEHICLE SOUND CONTROL SYSTEM**

(30) Priority: 02.09.2019 ES 201930767
(71) Applicant: Seat, S.A., 08760 Martorell - Barcelona (ES)
(72) Inventor: MOLINA MARTINEZ, Daniel, 08760 Martorell, Barcelona (ES); SALA RENART, Jaume, 08760 Martorell, Barcelona (ES); FERNÁNDEZ ABAD, Jose, 08760 Martorell, Barcelona (ES); ESCALANTE SEGURA, Miguel, 08760 Martorell, Barcelona (ES)
(74) Representative: Elzaburu S.L.P.

(57) **Abstract**

The present invention relates to a vehicle sound control system wherein a central control unit (112) generates outgoing sound signals able to be reproduced by sound reproduction devices (116), the sound reproduction device (116) emits individual sounds for a seat; multimedia devices (117) able to be connected to the central control unit (112), and a graphical user interface (118) represents on a touchscreen, first icons (T1) associated with the sound reproduction devices (116) to select a sound reproduction device (116); second icons (T2) represent sound signals associated with the corresponding first icon (T1); the second icon (T2) allows the user to select a first controllable sound input (115); the central control unit (112) sequentially detects a contact on a second icon (T2), a contact on a first icon (T1) to select a sound reproduction device (116), and the central control unit (112) provides the outgoing sound signal able to be reproduced by the selected sound reproduction device (116), wherein the outgoing sound signal includes the incoming sound signal selected based on the second contacted icon (T2).

## Description

### OBJECT

The invention relates to a system for assisting a user of a vehicle to independently operate an individualised sound system for the users of the interior cabin of the vehicle. The invention further relates to a method for independently controlling the sound system, as well as a computer program capable of executing the steps of the control method.

### STATE OF THE ART

A system for assisting a user of a motor vehicle to operate a sound reproduction system arranged in the interior cabin of the motor vehicle is known in the state of the art.

The support system allows the vehicle user to regulate the reproduction parameters of a sound signal to be reproduced based on the area of the interior cabin of the vehicle.

The user has means for controlling the reproduction of a sound signal, specifically, reproduction parameters of the reproducible sound signal. The reproduction parameters that can be modified are, for example, volume, frequency... Thus, by way of example, the user can modify the volume of the sound reproduced by sound reproduction devices in a specific area of the vehicle; for example, in a right rear area of the vehicle. It should be noted that it is a single sound signal, which is being centrally reproduced by the different sound reproduction devices of the vehicle.

The user of the vehicle interacts on a graphical user interface arranged, inside the interior cabin of the vehicle, in front of the user according to the forward direction of travel of the vehicle.

However, a driver user does not have an assistance system to control the reproduction parameters of different reproducible sound signals within the interior cabin of the vehicle.

### DESCRIPTION

The present invention seeks to solve one or more of the aforementioned drawbacks by means of a sound control system as defined in the claims.

Vehicle sound system is understood as a source of origin or central control unit, which sends outgoing sound signals to a plurality of sound outputs arranged in the interior cabin of a vehicle.

Thus, the present invention describes a sound control system located within the interior cabin of a vehicle which comprises a central control unit configured to generate a plurality of outgoing reproducible sound signals to a plurality of sound reproduction devices arranged, respectively, in proximity to a plurality of seats of the interior cabin of the vehicle; such that the sound reproduction devices are capable of reproducing individualised and customisable sound signals for vehicle users.

Traditionally, sound systems of the vehicle interior are known which are composed of a plurality of loudspeakers, which generate sound waves audible by users of the interior cabin of the vehicle. These loudspeakers are commonly arranged in the door panels, in the boot area or in the dashboard area of the vehicle, generating sound waves that can be simultaneously heard by all vehicle occupants.

The present invention is characterised by having sound reproduction devices configured to emit sound waves that can only be heard by one user. To that end, each sound reproduction device is associated with a seat of the vehicle such that it will emit sound waves so that they can be heard, individually, by the occupant of the particular seat, at the same time that they cannot be heard by the rest of the occupants of the vehicle. Thus, the central control unit is configured to generate a specific sound wave, for example, for the left rear occupant of the vehicle, generating a particular sound signal for the sound reproduction device associated with the left rear seat of the vehicle. Furthermore, the central control unit is configured to simultaneously generate a specific second sound wave for the right rear occupant of the vehicle, generating a particular sound signal for the sound reproduction device associated with the right rear seat of the vehicle. Examples of sound reproduction devices will be explained below.

The sound control system further comprises a plurality of first sound inputs associated, respectively, with the plurality of seats of the interior cabin of the vehicle; wherein the plurality of first sound inputs are able to be connected to a plurality of first multimedia electronic devices, to transmit incoming sound signals to the central control unit. Thus, similarly to sound emission, each seat of the vehicle comprises an associated sound input. A multimedia device, such as a Smartphone, a sound reproducer, an entertainment system is able to be connected to each one of the sound inputs by means of an input interface, such as a physical port, a wireless signal receiver, or other. Thus, the central control unit is configured to manage different sound inputs for different sound reproduction devices.

In order to carry out the management, the sound control system comprises a graphical user interface, which comprises at least one touchscreen connected to the central control unit.

The graphical user interface is configured to represent on the touchscreen a plurality of first icons able to be activated by touch, wherein the plurality of first icons are associated, respectively, with the plurality of sound reproduction devices to allow a user of the interior cabin of the vehicle to select at least one sound reproduction device. Furthermore, the graphical user interface is configured to represent on the touchscreen a plurality of second icons that can be activated by touch, wherein the plurality of second icons are associated, respectively, with the plurality of first icons, wherein the second icons allow the user of the interior cabin of the vehicle to select a first controllable sound input and wherein the second icon shows a graphical representation of the incoming sound signal received by the first sound input selected.

The graphical user interface is configured to, in collaboration with the central control unit, sequentially detect on the touchscreen a contact with a second icon to select the incoming sound signal to be controlled; detect a contact with at least one first icon to select the at least one sound reproduction device to reproduce the incoming sound signal to be controlled.

The central control unit is configured to provide the outgoing sound signal able to be reproduced by the at least one sound reproduction device selected based on the first contacted icon, wherein the outgoing sound signal includes the incoming sound signal selected based on the second contacted icon. Given the existence of different incoming sound signals, the control system of the present invention offers the user an efficient and intuitive control system to be able to select the different sound reproducers in which to listen to the different incoming sound signals. Thus, the user, preferably an occupant of the front seats of the vehicle, may select that all the occupants of the seats of the vehicle listen to the same incoming sound signal, as well as selecting that the occupants of certain seats of the vehicle listen to a particular signal of incoming sound of their interest. It should be noted that, given the existence of different incoming sound signals, there is a need to be able to manage them efficiently.

The central control unit is configured to activate the generation of the outgoing sound signal for the particular sound reproduction device if contact with the at least one first icon is detected from the touchscreen within a predefined period of time. The first predefined period of time starts when the touchscreen detects contact with the second icon. If there is no contact with a first icon within the predefined period of time, the function is restarted, so a second icon must be contacted again, thus starting another predefined period of time. Furthermore, if a contact occurs on a first icon outside the predefined period of time, the central control unit does not activate the generation of the outgoing sound signal for the particular sound reproduction device associated with the first icon.

The central control unit is configured to link, by default, the outgoing sound signal to be reproduced in the at least one sound reproduction device with the incoming sound signal received from the first sound input connected to the at least one sound reproduction device. Therefore, when a multimedia device is connected to a sound input associated with a particular seat of the vehicle, thus generating an incoming sound signal transmitted to the control unit, the control unit generates, by default, a sound signal for the associated sound reproduction device the content of which is that of the aforementioned incoming sound signal. In other words, without the action of the user on the graphical user interface, each sound reproducer will emit a sound signal that is the same as that of the multimedia device associated with the seat thereof.

The central control unit is configured to send a control signal to the selected sound reproduction device. The control signal comprises instructions to deactivate the sound signal, being reproduced by the at least one selected sound reproduction device, such that, if the selected sound reproduction device receives the instruction for deactivating the outgoing sound signal; the selected sound reproduction device goes into a stop state or STOP, into a suspension state or PAUSE, or it simply starts playing a new outgoing sound signal received from the central control unit, which originates from a second multimedia device able to be connected to the central control unit by means of a second sound input.

The central control unit is connected to a plurality of user detection devices configured to detect, respectively, the occupation of at least one seat of the vehicle and to send the corresponding detection signal to the central control unit.

The user presence detection device is of the seat sensor type arranged on the seat, a recognition camera or the like.

If a presence signal is received by the central control unit, the graphical interface is configured to represent the corresponding first icon on the touchscreen showing first visual properties associated with the sound reproduction device of the occupied seat; otherwise, if the central control unit does not receive a presence signal, the graphical interface is configured to represent on the touchscreen the corresponding first icon showing second visual properties relative to the unoccupied seat. Visual properties is understood as the colour, transparency, intensity, etc. of representation of the first icon on the screen.

The central control unit is configured to disable the outgoing sound signal to the sound reproduction device corresponding to the unoccupied seat of the vehicle, thus improving the energy efficiency of the system and avoiding the possibility of errors on the part of the user in selecting a sound reproduction device that does not have an occupant to listen to the generated sound signals.

The graphical user interface is configured to represent at least one third icon on the touchscreen also able to be activated by touch from the touchscreen; to allow a user to modify at least one characteristic property of the sound signal corresponding to the sound reproduction device of the occupied seat based on the at least one first contacted icon, to the at least one second contacted icon or to the at least one third contacted icon.

The modifiable characteristic parameters of the sound signal are of the volume, bass, treble type or the like. Likewise, the occupant user may put the sound reproduction device into silent mode, select different sound reproduction devices and simultaneously modify characteristic properties of the sound signal corresponding to different sound reproduction devices of the seats of the vehicle. The third icon is of the bar type to modify the volume or frequency of the sound signal being reproduced by means of one-off contacts, by means of drags or the like.

If the at least one third icon is contacted on the touchscreen within a second predefined period of time, the central control unit is configured to activate the modification of the outgoing sound signal for the corresponding sound reproduction device wherein the second predefined period of time starts when the touchscreen detects the contact of the at least one first icon or with the at least one second icon. Given the existence of a plurality of outgoing sound signals independent of each other, a system is provided which is capable of simultaneously and efficiently managing the modification of at least one sound parameter of the outgoing sound signals, being able to easily choose which signals are to be modified and which signals are not.

The graphical user interface is configured to divide the touchscreen into a plurality of screen areas corresponding to the plurality of seats in the interior cabin of the vehicle.

A touchscreen area corresponds to a first icon able to be activated from the respective touchscreen area; that is, the distribution of touchscreen areas is substantially equal to the distribution of the seats in the interior cabin of the vehicle; such that the user can easily and intuitively associate the controllable sound reproduction device of the corresponding seat of the vehicle.

According to a first embodiment, the sound reproduction device is connected to the corresponding sound output by means of a plug-in connection type of the Jack type, USB port, by means of wireless connections, Bluetooth, Wi-Fi, or the like. Thus, the sound reproduction devices connected to the sound outputs will be any type of earphone that allows the vehicle occupant to individually reproduce the outgoing sound signal. The sound reproduction device may further be a Smartphone or an external multimedia device, which in turn may comprise earphones or other means so that the sounds emitted are individually heard by a user.

The central control unit will send the outgoing sound signal to each sound output according to the instructions performed by the user. The sound output will be in charge of transmitting the outgoing sound signal to the sound reproduction device connected to said sound output.

According to an alternative embodiment, the sound reproduction device is of the directional sound device type; such that, only the user who occupies a seat of the vehicle receives the sound waves emitted by the corresponding directional sound reproduction device, without the sound waves being able to be heard by the rest of the vehicle occupants. They are therefore loudspeakers preferably arranged in each one of the seats of the vehicle that emit sound waves able to be directed towards the outer ear of the occupant of said seat. Thereby, these are focused and directed sound waves based on the position of the user, so that they are only heard by the occupant.

The graphical user interface is configured to show a fourth icon, able to be activated by touch, on the touchscreen, to select all the sound reproduction devices together so that the sound reproduction devices of the seats of the vehicle simultaneously reproduce the same outgoing sound signal provided from the central control unit, if the graphical user interface sequentially detects a contact with the second icon for selecting the selected incoming sound signal and a contact with the fourth icon on the touchscreen.

The central control unit is configured to activate or deactivate the generation of the outgoing sound signal from the sound reproduction device associated with a particular seat of the vehicle if, previously, the central control unit has received a signal requesting activation or deactivation from the sound reproduction device itself of the occupied seat.

The activation or deactivation request signal is able to be associated with a do not disturb operation mode. Thus, the central control unit will not be able to generate an outgoing sound signal to the sound reproduction device of the occupied seat. Optionally, the graphical user interface is configured to display the first icon with the second visual properties on the touchscreen.

The central control unit comprises a plurality of second inputs able to be connected to corresponding second multimedia devices and associated with vehicle assistance systems, such as a central music equipment, a satellite navigation system, a multimedia content provider device; such that, the central control unit receives a multimedia content signal from the second multimedia content devices and distributes them to the plurality of sound reproduction devices associated with the seats, a central sound reproduction device and/or a multimedia electronic screen, so that the occupants of the seats of the vehicle receive the multimedia content signal individually or centrally. It should be noted that the sound control system is not only capable of managing the different incoming sound signals from external multimedia devices. It is further configured to manage different incoming sound signals corresponding to different functions of the vehicle itself. Thus, an incoming sound signal corresponding to a received navigation function can be only associated with the driver's and front passenger's seats of the vehicle. Thus, an incoming sound signal corresponding to explanations of points of interest around the vehicle can be associated with all the seats of the vehicle.

The graphical user interface is configured to represent a fifth icon on the touchscreen able to be activated by touch from the touchscreen, to allow a vehicle user to select a centralised distribution mode or an individualised distribution mode of the multimedia content signal among the different vehicle users. The fifth icon belongs to a menu for selecting vehicle functionalities. A centralised distribution is understood as the plurality of loudspeakers arranged in the interior cabin of the vehicle, the plurality of loudspeakers emitting a single outgoing sound signal.

According to an additional aspect of the present invention, a method for controlling the sound within the interior cabin of the vehicle is disclosed, wherein the central control unit is capable of providing outgoing sound signals reproducible in an individualised and personalised manner by a plurality of sound reproduction devices arranged in proximity to corresponding seats of the vehicle.

The sound reproduction device is configured to emit individualised directional sound waves for the respective occupant of the seat of the vehicle; the outgoing sound signals being generated in response to the presence of an input made by a user of the vehicle by means of the touchscreen of the graphical user interface and operatively connected to the central control unit.

The central control unit receives an incoming sound signal from a first plurality of sound inputs corresponding to the seats of the vehicle and able to be connected to respective first multimedia electronic devices and/or corresponding to the different systems and functions of the vehicle itself.

The graphical user interface shows first icons on the touchscreen, able to be activated by touch, associated with the corresponding sound reproduction devices to allow a user to select at least one sound reproduction device of the vehicle; second icons, able to be activated by touch, associated with the corresponding first icons to allow the user of a seat of the vehicle to select a first controllable sound input.

By means of the graphical user interface, the central control unit sequentially detects a contact with a second icon on the touchscreen to select the controllable incoming sound signal; a contact with a first icon or with several first icons to select one or more sound reproduction devices of the vehicle, which will reproduce the selected incoming sound signal based on the second contacted icon.

The central control unit provides the outgoing sound signal to be reproduced by the one or several selected sound reproduction devices of the seat based on the first contacted icons; such that the outgoing sound signals include the selected incoming sound signal based on the second contacted icon.

According to an additional aspect, the present invention relates to a computer program able to be executed in the central control unit of the vehicle, wherein the central control unit comprises computer-readable means for executing the aforementioned steps of the method.

### BRIEF DESCRIPTION OF THE FIGURES

A more detailed explanation is given in the description that follows and is based on the attached figures:
Figure 1 shows in a block diagram a sound control system arranged inside the interior cabin of a motor vehicle;
Figure 2 shows a first schematic view represented by the graphical interface, wherein each incoming sound signal is independently reproduced in each one of the seats of the motor vehicle;
Figure 3 shows a second schematic view represented by the graphical interface, wherein the same incoming sound signal is being reproduced in three seats of the motor vehicle;
Figure 4 shows a third schematic view represented by the graphical interface, wherein the absence of an occupant in a particular seat of the motor vehicle detected by a presence sensor is represented; and
Figure 5 shows a fourth schematic view represented by the graphical interface, wherein the same sound property is being modified simultaneously in three outgoing sound signals reproduced in the motor vehicle.

### DETAILED DESCRIPTION

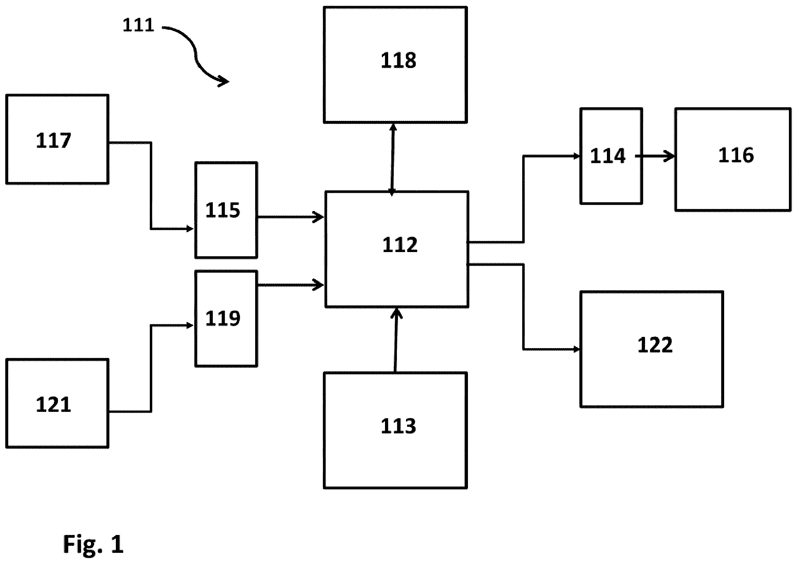

Referring now to Figure 1, wherein a sound control system of the interior cabin of a vehicle 111 is shown, wherein the system comprises a central control unit 112 that provides outgoing sound signals able to be reproduced by a plurality of independent sound reproduction devices 116, which are installed in proximity to the corresponding seats of the interior cabin of the vehicle 111. That is, a seat of the vehicle has arranged in proximity thereof the respective sound reproduction device 116 to reproduce particular customised sound signals for a user of the corresponding seat of the vehicle 111.

The sound reproduction devices 116 generate sound waves that can be individually heard by a user. Thus, the sound reproduction devices 116 may be, according to a first embodiment, loudspeakers adapted to direct sound waves towards the outer ear of the user, such that the sound waves are only heard by the user. The speakers will be associated with each seat of the vehicle 111, such that the sound signal emitted by each loudspeaker is only heard by the occupant of the seat.

According to a second embodiment, the sound reproducers 116 may be headphones able to be connected to a sound output 114, each sound output 114 being associated with a particular seat of the vehicle 111. Thus, each sound output 114 will be associated with each seat of the vehicle 111, such that the sound signal emitted by each earphone is heard by the occupant of the seat.

According to a third embodiment, the sound reproducers 116 may be an electronic device external to the vehicle, able to be connected to a sound output 114, each sound output 114 being associated with a particular seat of the vehicle 111. Headphones are able to be connected to the electronic devices. Thus, each sound output 114 will be associated with each seat of the vehicle 111, such that the sound signal emitted by each earphone is heard by the occupant of the seat.

Mention has been made of different variants of sound reproduction devices 116 that can be combined simultaneously in a single vehicle 111, other devices configured to fulfill the indicated function being further possible. Furthermore, said exposed variants may be simultaneously combined in a single vehicle 111.

The central control unit 112 is operatively connected to a touchscreen; comprised in a graphical user interface 118; wherein the touchscreen is located in the front part of the interior cabin of the vehicle, opposite the direction of travel of the vehicle 111. Alternatively, there may be different touchscreens arranged in the interior cabin of the vehicle, so that the different occupants of the vehicle can manage the sound signals of the vehicle 111.

Likewise, a plurality of first multimedia devices 117 are able to be connected to the central control unit 112 by means of corresponding first sound inputs 115 associated with the corresponding seats of the interior cabin of the vehicle, to transmit the respective sound signal to the central control unit 112. The first multimedia devices 117 may be electronic devices external to the vehicle able to be connected by physical or wireless means to a sound input 115. In this way, the central control unit 112 associates each incoming sound signal with each occupant of a particular seat. The first sound inputs 114 may be arranged in proximity to the corresponding seats of the interior cabin of the vehicle 111.

The central control unit 112 is electrically connected to a user detection device 113 of a seat of the vehicle 111; such that the detection device 113 transmits a presence signal to the central control unit 112 if a user occupies a seat of the interior cabin of the vehicle 111. The user detection device 113 of a seat of the vehicle 111 is of the seat sensor type, a biometric recognition device or the like. In the absence of an occupant presence signal in a seat of the vehicle, the central control unit 112 does not emit outgoing sound signals to the sound reproduction device 116 or to the sound output 114 associated with the unoccupied or empty seat. Additionally, the central control unit 112 sends presence signals for the graphical user interface 118 to represent the status to the user.

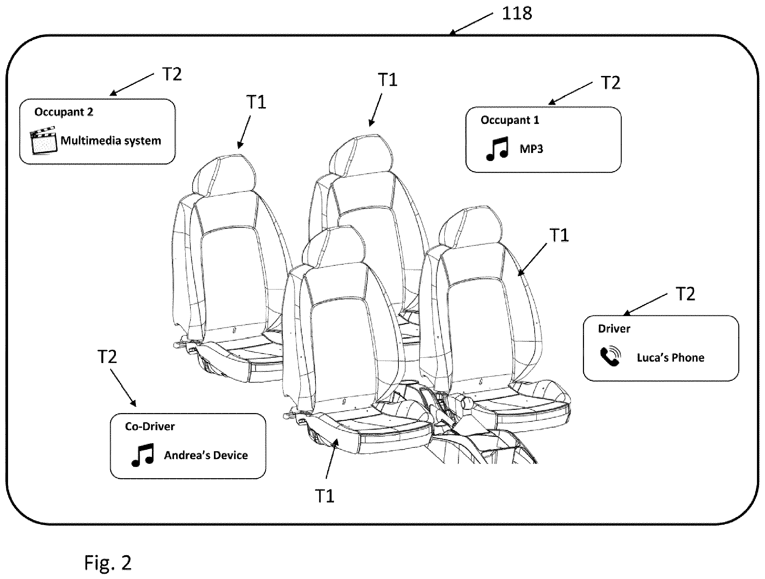

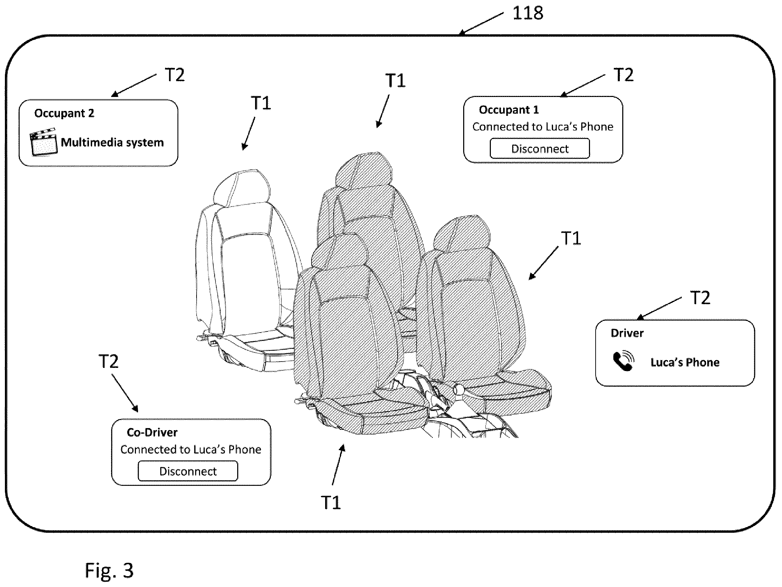

Referring now to Figures 2 and 3, the graphical user interface 118 shows seats of the vehicle 111 on the touchscreen, the seats being distributed on the touchscreen keeping an equivalent distribution to the distribution of the seats in the interior cabin of the vehicle 111. Thus, as seen in the figures, a driver's seat, a front passenger seat, a right rear seat and a left rear seat are shown, a user of the sound control system of the present invention being able to quickly and efficiently identify the seats and the configuration thereof.

The graphical user interface 118 shows first icons T1 on the touchscreen, able to be activated by touch; such that the corresponding first icon T1 is associated with the respective sound reproduction device 116, in turn, with the respective seat of the vehicle 111; to allow the occupant user to select, by means of contact on the first icon T1, at least one sound reproduction device 116 of a seat of the vehicle. As can be seen, each first icon T1 is represented by a seat with an equivalent arrangement to the arrangement thereof inside the cabin of the vehicle 111.

The graphical user interface 118 shows second icons T2 on the touchscreen, able to be activated by touch; such that the corresponding second icon T2 is associated with the respective first icon T1 of the previous tab of the touchscreen. In an area close to each one of the first icons T1, represented as seats, each one of the second icons T2 is represented, in the form of a tab. A second icon T2 corresponds to each first icon T1.

The second icon T2 represents a particular incoming sound signal received by the respective first sound input 115 from the corresponding first multimedia device 117. The second icon T2 allows the occupant user of the vehicle 111 to select the first sound input 115 able to be controlled by means of the first multimedia device 117.

The central control unit 112 activates the generation of the outgoing sound signal to the particular sound reproduction device 116 of a seat of the vehicle, if contact with the first icon T1 is detected from the touchscreen within a predefined period of time. The central control unit 112 starts the predefined period of time if the second icon T2 is contacted on the touchscreen.

The central control unit 112 transmits a control signal to the selected sound reproduction device 116 of a seat of the vehicle, wherein the control signal comprises instructions to deactivate the sound signal which is currently being reproduced by the sound reproduction device 116 of the vehicle.

Figure 2 shows four seats represented with four first icons T1. Each first icon T1 represents, in turn, at least one sound reproduction device 116, which emits sound signals towards the occupant of the seat. Likewise, 4 second icons T2 are observed, each one associated with the respective first icon T1 thereof. Starting with the driver, represented by the first icon T1 arranged at the bottom right, the central control unit 112 emits an outgoing sound signal of a telephone call with Luca to the respective sound reproduction devices 116 associated with said seat. However, for the front passenger, represented by the first icon T1 arranged at the bottom left, the central control unit 112 emits an outgoing sound signal related to a musical track transmitted by Andrea's multimedia device 117. Furthermore, the occupant 1, represented by the first icon T1 arranged at the top right, the central control unit 112 emits an outgoing sound signal related to a musical track transmitted by the "MP3" multimedia device 117. Finally, the occupant 2, represented by the first icon T1 arranged at the top left, the central control unit 112 emits an outgoing sound signal related to a sound track of a movie transmitted by the "Multimedia" entertainment multimedia device 117 of the vehicle 111 itself.

As previously mentioned, each one of the occupants has a multimedia device 117 of different types in connection with a respective sound input 115. The connection may be physical or wireless. In this way, each multimedia device 117 emits an incoming audio signal to the respective sound input 115 thereof, in turn transmitted to the control unit 112. Due to the fact that each sound input 115 is associated with a particular seat of the vehicle, the control unit 112 recognises the origin of each incoming sound signal.

The central control unit 112 is configured to link, by default, the outgoing sound signal to be reproduced in the at least one sound reproduction device 116 with the incoming sound signal received from the sound input 115 connected to the at least one sound reproduction device 116. Thus, without the action of the user on the graphical user interface 118, each sound reproduction device 116 will emit an outgoing sound signal that is the same as that of the multimedia device 117 associated with the seat thereof.

Advantageously, the sound control system of the present invention further enables the incoming sound signals to be distributed to the respective sound reproduction devices 116 according to the will or wishes of the occupants of the vehicle 111.

Thus, the central control unit 112 detects a contact on a second icon T2 on the touchscreen, to select the controllable incoming sound signal provided from the first multimedia device 117. Subsequently, the central control unit 112 detects a contact or successive contacts on first icons T1, to select a particular sound reproduction device 116 of a seat of the vehicle 111. The control unit will generate outgoing sound signals for the sound reproduction devices 116 associated with the first contacted icons T1 to reproduce the selected incoming sound signal based on the second contacted icon T2.

Thus, as shown in Figure 3, the control unit 112, in cooperation with the graphical user interface 118, has detected a contact on the second icon T2 associated with the driver's seat. In other words, the user has selected the incoming sound signal of "call Luca" content. Subsequently, a contact has been detected on the first icons T1 associated with the seats of the front passenger and passenger 1. In this way, the control unit generates an outgoing sound signal for the sound reproduction devices 116 associated with said seats so that they reproduce the incoming sound signal with "call Luca" content. Thereby, all three occupants of the selected seats can participate in the call in question. Since the first icon T1 associated with the occupant 2 of the vehicle has not been contacted, the incoming sound signal with "call Luca" content has not been shared, the reproduction of the outgoing sound signal related to the sound track of a movie transmitted by the "Multimedia" entertainment multimedia device 117 of the vehicle 111 itself being continued.

Once the central control unit 112 associates a new outgoing sound signal with a particular sound reproduction device 116, the previous outgoing sound signal reproduced by said sound reproduction device 116 is deactivated.

The deactivation functionality may mean to stop/STOP, to pause/PAUSE, or simply to reproduce a different outgoing sound signal sent by the central control unit 112 to the sound reproduction device 116 of the selected seat of the vehicle.

Additionally, as shown in the "Disconnect" icon of each second icon T2, the user can choose to end the outgoing sound signal the reproduction of which is forced by the central control unit 112, so that the content would be reproduced again by default, that is, the incoming sound signal associated with its own multimedia device 117, if any.

Optionally, the central control unit 112 is electrically connected to a user detection device 113 of a seat of the vehicle 111; such that the detection device 113 transmits a presence signal to the central control unit 112 if a user occupies a seat of the interior cabin of the vehicle 111.

The user detection device 113 of a seat of the vehicle 111 is of the seat sensor type, a biometric recognition device or the like.

In response to a presence signal received in the central control unit 112, the graphical user interface 118 shows corresponding icons of occupied and/or unoccupied seats on the touchscreen associated with the corresponding first icons T1 able to be activated on the touchscreen with an equivalent distribution to the representation of the distribution of the seats in the interior cabin of the vehicle 111; such that the user easily and intuitively associates the sound reproduction device 116 located in proximity to the corresponding seat of the vehicle, which is to be controlled.

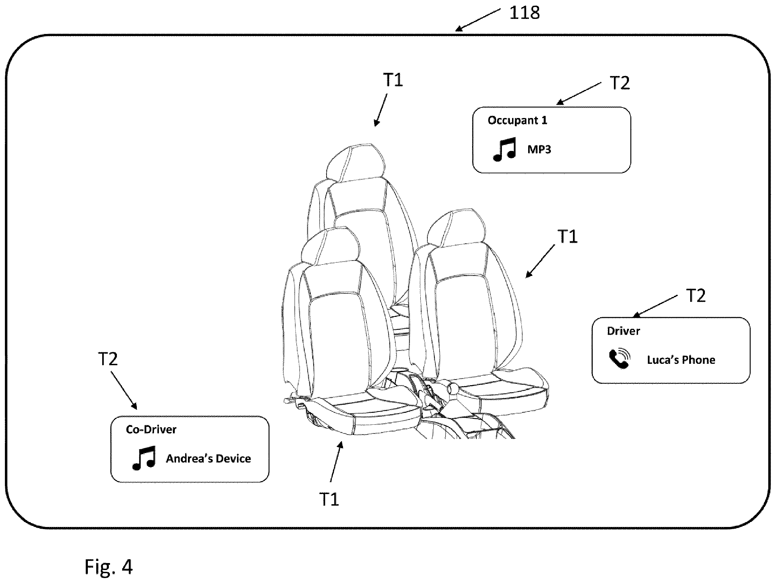

Thus, as shown in Figure 4, the detection devices 113 associated with the seats of the driver, front passenger and right rear position emit a presence signal to the central control unit 112. Thus, the central control unit 112 emits outgoing sound signals for the respective sound reproduction devices 116. On the contrary, there is an absence of the presence signal of the detection device 113 associated with the left rear seat, so the central control unit 112 does not emit an outgoing sound signal. Additionally, the graphical interface 118 does not represent the corresponding first icon T1 and the corresponding second icon T2 associated with said seat, thereby avoiding errors for the user in the management of the audio signals.

An absence of said first icon T1 and second icon T2 has been represented, but any other valid representation could be chosen, such as increased transparency, change in colour, etc. Thus, if the presence signal has been sent to the central control unit 112, this central control unit 112 also shows on the touchscreen associated with the first icon T1, particular first graphical properties of the sound reproduction device 116 of the seat of the vehicle 111. In the absence of the presence signal, the central control unit 112 shows the first icon T1 on the touchscreen with particular second graphical properties of the sound reproduction device 116 of the seat of the vehicle 111.

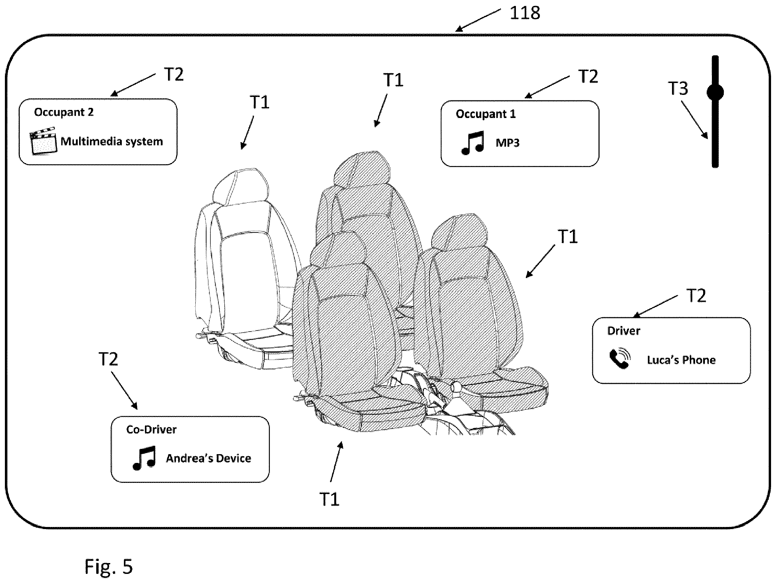

As shown in Figure 5, the graphical user interface 118 shows at least one third icon T3 on the touchscreen, able to be activated by touch, to allow the occupant user of a seat of the vehicle 111 to modify characteristic sound parameters, by means of the central control unit 112 if sequential contacts are detected on a second icon T2 or a contact on a first icon T1, and a contact on a third icon T3.

In summary, the central control unit 112 modifies a particular sound characteristic parameter of the outgoing sound signal able to be reproduced by the sound reproduction device 116 of the selected seat of the vehicle 111 if a third icon T3 is contacted sequentially to a first contacted icon T1 or a second contacted icon T2. Thus, according to Figure 5, the central control unit 112 has detected a contact with the first icons T1 corresponding to the seat of the driver, front passenger and occupant. It may also be a contact on the respective second icons T2 associated with the mentioned seats. Subsequently, the control unit 112 detects a contact on the third icon T3; such that properties of the outgoing sound signal are simultaneously modified, such as volume, bass frequency, treble, activating a silence/MUTE mode, wherein the third icon T3 can be represented as a bar from where it is possible to modify the sound parameter by means of one-off contacts, by means of drags or the like. It should be mentioned that, since the first icon T1 or second icon T2 associated with the left rear seat has not been contacted, the control unit 112 does not modify the properties of the outgoing sound signal.

The modification of the particular outgoing sound signal for the sound reproduction device 116 of the selected seat of the vehicle 111 can be carried out if the contact on the third icon T3 of the touchscreen is performed within a predefined period of time, the predefined period of time starting if the first icon T1 or the second icon T2 is previously contacted on the touchscreen.

The sound output 114 is able to be connected to the sound reproduction device 116 corresponding to the seat of the interior cabin of the vehicle 111, by means of an electrical connection of the type Jack, a USB port, by means of a wireless connection of the type Bluetooth, Wi-Fi or the like.

According to another embodiment, the system comprises at least one second sound input 119 able to be connected to a corresponding second multimedia device 121 of the type central entertainment system of the vehicle 111, driving support system, satellite navigation system, information system, e.g., tourist guide.

Therefore, the corresponding input signal transmitted from the second multimedia device 121 to the central control unit 112 by means of the second sound input 119 is centrally shareable for all occupants of the seats of the vehicle 111 or individually for some of the occupants of the seats of the vehicle 111 by means of the corresponding sound reproduction devices 116 of the seat of the vehicle 111. For example, traffic information data of the route followed by the vehicle 111 are primarily of interest to the driver, so the user links the incoming sound signal from said second multimedia device 121 with the sound reproduction devices 116 associated with the driver's seat. According to another example, information data of points of interest around the vehicle 111, such as historical information, architectural information, etc. are of interest to all the occupants of the vehicle, so the user links the incoming sound signal of said second multimedia device 121 with all sound reproduction devices 116 associated with all the seats of the vehicle 111.

Optionally, the sound system comprises central sound reproduction devices 122 for centrally sharing sound signals. The reproduction devices are loudspeakers distributed throughout the inside cabin of the vehicle 111, not being of the directional type. In this way, the control unit may send outgoing sound signals for the different individualised sound devices 116 for each of the users or it may, alternatively, generate a single outgoing sound signal to be centrally reproduced by the central sound reproduction devices 122. This information may be, for example, information data of points of interest close to the route followed by the vehicle 111.

Default operation of the system of the present invention is understood as a procedure for starting the sound control system, wherein at least one first icon T1 or one second icon T2 is not contacted on the touchscreen. In this default operating mode, the incoming sound signal received from the sound input 115 associated with a particular seat is transmitted by the central control unit 112 to the sound reproduction device 116 or sound output 114 associated with the same particular seat.

By means of a contact on a fourth icon T4, not represented in the figures, which can be displayed on the touchscreen of the graphical interface 118, all the sound reproduction devices 116, simultaneously, reproduce the selected sound signal based on the incoming sound signal selected by means of the second contacted icon T2.

If the central control unit 112 previously receives a deactivation request from a particular sound reproduction device 116 of a seat of the vehicle 111, the central control unit 112 deactivates the generation of the outgoing sound signal to the particular sound reproduction device 116 of the vehicle 111.

The aforementioned functionality corresponds to a do not disturb operation mode, preventing a user from sending an outgoing sound signal to the sound reproduction device 116 associated with the seat that has the do not disturb function activated.

### LIST OF NUMERICAL REFERENCES

111 vehicle
112 central control unit
113 user detection device
114 sound output
115 first sound input
116 sound reproduction device
117 first multimedia device
118 graphical user interface
119 second sound input
121 second multimedia device
122 central sound reproduction device
T1 first icon
T2 second icon
T3 third icon
T4 fourth icon

## Claims

1. A sound control system for the interior cabin of a vehicle, which comprises:
- a central control unit (112) configured to generate outgoing sound signals able to be reproduced by a plurality of sound reproduction devices (116), wherein the sound reproduction devices (116) are associated with corresponding seats in the interior cabin of the vehicle (111); wherein the sound reproduction device (116) is configured to emit particular individual sounds for an occupant of the respective seat,
- a graphical interface (118) comprising at least one touchscreen operatively connected to the central control unit (112),
- a plurality of multimedia devices (117) able to be connected to the central control unit (112), by means of corresponding first sound inputs (115), wherein the first sound inputs (115) are associated with corresponding seats of the interior cabin of the vehicle to transmit to the central control unit (112) at least one incoming sound signal;
**characterised in that** the graphical user interface (118) is configured to represent on the touchscreen:
- first icons (T1) able to be activated by touch, wherein each first icon (T1) is associated with the corresponding sound reproduction device (116) to allow the occupant user to select at least one sound reproduction device (116);
- second icons (T2) able to be activated by touch, wherein each second icon (T2) is associated with the corresponding first icon (T1), and wherein each second icon (T2) represents a particular incoming sound signal received by the respective sound input (115), wherein each second icon (T2) allows the occupant user to select the first sound input (115) to be controlled;
wherein the central control unit (112) is configured to sequentially detect on the touchscreen:
- a contact on a second icon (T2), to select the incoming sound signal to be controlled;
- a contact on a first icon (T1), to select at least one sound reproduction device (116) to reproduce the selected incoming sound signal, based on the second contacted icon (T2);
and wherein the central control unit (112) is configured to provide the outgoing sound signal able to be reproduced by the at least one selected sound reproduction device (116) based on the first contacted icon (T1), wherein the outgoing sound signal includes the selected incoming sound signal based on the second contacted icon (T2).

2. The control system according to claim 1, wherein the central control unit (112) is configured to activate the generation of the outgoing sound signal for the particular sound reproduction device (116) if contact with the at least one first icon (T1) is detected from the touchscreen within a predefined period of time, wherein the predefined period of time starts when the touchscreen detects the contact on the second icon (T2).

3. The control system according to any of the preceding claims, wherein the central control unit (112) is configured to send a control signal to the at least one selected sound reproduction device (116), wherein the control signal comprises instructions to deactivate the previous sound signal reproduced in the at least one sound reproduction device (116).

4. The control system according to any of the preceding claims, wherein the system comprises at least one presence detection device (113) configured to detect an occupation of a seat inside the interior cabin of the vehicle (111) and to send a presence signal to the central control unit (112) in response to the detected seat occupancy, wherein the graphical interface (118) is configured to display on the touchscreen:
- the first icon (T1) associated with the corresponding sound reproduction device (116) with particular first visual properties, if the presence signal has been sent to the central control unit (112), or
- the first icon (T1) associated with the corresponding sound reproduction device (116) with particular second visual properties, in the absence of the presence signal if the presence of a user has not been detected in the seat corresponding to the sound reproduction device (116) represented by the first icon (T1).

5. The control system according to claim 4, wherein the central control unit (112) is configured to deactivate the generation of the outgoing sound signal to the sound reproduction device (116), in the absence of the presence signal of the corresponding seat associated with the sound reproduction device (116).

6. The control system according to any of the preceding claims, wherein the graphical interface (118) is configured to represent at least one third icon (T3) on the touchscreen, able to be activated by touch, on the touchscreen to allow a user to modify at least one characteristic sound parameter, wherein the graphical interface (118) is configured to detect on the at least one touchscreen, in collaboration with the central control unit (112):
- at least one contact with the at least one second icon (T2) or one contact with the at least one first icon (T1), and
- one contact with the at least one third icon (T3),
and wherein the central control unit (112) is configured to modify the particular sound characteristic parameter of the at least one outgoing sound signal able to be reproduced in the corresponding selected sound reproduction device (116) based on the at least one first icon (T1) or on the at least one second contacted icon (T2), wherein the particular sound characteristic parameter is modified based on the contact with the third icon (T3).

7. The control system according to claim 6, wherein the central control unit (112) is configured to activate the modification of the particular outgoing sound signal for the corresponding sound reproduction device (116) if contact with the third icon ( T3) is detected by the touchscreen within a predefined period of time, wherein the predefined period of time is initiated when the touchscreen detects the at least one contact with the at least one first icon (T1) or with the at least one second icon (T2).

8. The control system according to any of the preceding claims, which comprises at least one sound output (114) associated with the corresponding seat in the interior cabin of the vehicle (111), wherein the sound reproduction device (116) is able to be connected to the respective sound output (114).

9. The control system according to any of claims 1 to 7, wherein the sound reproduction device (116) is of the directional sound device type.

10. The control system according to any of the preceding claims, wherein the system comprises second sound inputs (119) associated with vehicle assistance systems.

11. The control system according to any of the preceding claims, wherein the central control unit (112) is configured to connect, by default, the outgoing sound signal able to be reproduced in the sound reproduction device (116, 121) with the incoming sound signal received from the sound reproduction device (116, 121) by means of the sound input (115, 119), the sound reproduction device (116) and the sound input (115, 119) being associated with the same seat of the vehicle.

12. The control system according to any of the preceding claims, wherein the graphical interface (118) is configured to represent a fourth icon (T4) on the touchscreen, able to be activated by touch, to enable all the sound reproduction devices (116) to be selected together, wherein the graphical interface (118) is configured to, in collaboration with the central control unit (112), sequentially detect on the at least one touchscreen:
- a contact with a second icon (T2), to select the incoming sound signal to be controlled,
- a contact with the fourth icon (T4),
and wherein the central control unit (112) is configured to generate the outgoing sound signal able to be reproduced by all of the sound reproduction devices (116) together based on the incoming sound signal selected by means of the second contacted icon (T2).

13. The control system according to any of the preceding claims, wherein the central control unit (112) is configured to deactivate the generation of the outgoing sound signal to a particular sound reproduction device (116) if, previously, the central control unit (112) has received a deactivation request from a particular sound reproduction device (116).

14. A method for controlling a sound inside the interior cabin of a vehicle (111), wherein the method comprises carrying out the following steps:
- generating at least one outgoing sound signal able to be reproduced by a plurality of sound reproduction devices (116) by means of a central control unit (112), wherein each sound reproduction device (116) is associated with corresponding seats of the interior cabin of the vehicle, wherein the sound reproduction device (116) is configured to emit particular individual sounds for an occupant of the vehicle, wherein the outgoing sound signals are generated in response to the detection of contacts made by a user on a touchscreen comprised in a graphical interface (118) and operatively connected to the central control unit (112),
- receiving an incoming sound signal from a plurality of sound inputs (115), wherein the sound inputs (115) are associated with the corresponding seats of the vehicle (111) and able to be connected to respective multimedia devices (117);
**characterised in that** the method further comprises the representation on the touchscreen:
- first icons (T1) able to be activated by touch, wherein each first icon (T1) is associated with the corresponding sound reproduction device (116) to allow the occupant user to select at least one sound reproduction device (116);
- second icons (T2) able to be activated by touch, wherein each second icon (T2) is associated with the corresponding first icon (T1), and wherein each second icon (T2) represents a particular incoming sound signal received by the respective sound input (115), wherein each second icon (T2) allows the occupant user to select the first sound input (115) to be controlled;
wherein the method further comprises sequentially detecting:
- a contact on a second icon (T2), to select the incoming sound signal to be controlled;
- a contact on a first icon (T1), to select at least one sound reproduction device (116) to reproduce the selected incoming sound signal based on the second contacted icon (T2);
and wherein the method further comprises generating the outgoing sound signal able to be reproduced by the at least one selected sound reproduction device (116) based on the first contacted icon (T1), wherein the outgoing sound signal includes the selected incoming sound signal based on the second contacted icon (T2).

15. A computer program able to be executed in a central control unit (112) of a vehicle (111), wherein the central control unit (112) comprises computer-readable means for executing the steps of the method according to claim 14.
